# EUROPÄISCHE PATENTSCHRIFT

(11) **EP 1 616 515 B1**
(45) Veröffentlichungstag und Bekanntmachung des Hinweises auf die Patenterteilung: **12.11.2008**
(21) Anmeldenummer: 05106345.1
(22) Anmeldetag: 12.07.2005
(51) Int. Cl.: A47J 39/00, A47J 27/16

(54) **Dampfgargerät**
Food steamer
Cuisseur à vapeur

(30) Priorität: 15.07.2004 EP 04360069
(43) Veröffentlichungstag der Anmeldung: 18.01.2006
(73) Patentinhaber: BSH Bosch und Siemens Hausgeräte GmbH, 81739 München (DE)
(72) Erfinder: Mastio, Emmanuel, 67118 Geispolsheim (FR); Hoffmann, Olivier, 67120 Molsheim (FR); Heppi, Didier, 67230 Kertzfeld (FR)

(56) Entgegenhaltungen:
- EP-A- 0 457 971
- EP-A- 0 723 112
- EP-A- 0 893 084
- EP-A- 1 321 082
- US-A- 4 506 598
- US-A- 4 701 334

## Beschreibung

Die vorliegende Erfindung betrifft ein Dampfgargerät mit den Merkmalen des Oberbegriffs des Anspruchs 1.

Zur Dampferzeugung in Dampfgargeräten eignen sich zwei grundsätzliche Prinzipien. Beim ersten Prinzip wird ein Wasservolumen eines Behälter erhitzt und teilweise zum Sieden gebracht, so dass Wasseranteile die Oberfläche des Wasservolumens als Dampf verlassen. Entsprechend des bekannten Tauchsiederprinzips kann die hierfür notwendige Wärmequelle im Wasser eingetaucht sein, um das Wasser direkt zu erhitzen. Wahlweise kann die Wärmequelle den Behälter heizen, um das Wasser auf indirekte Weise aufzuwärmen. Dieses Tauchsiederprinzip findet sich beispielsweise in DE 32 15 812 A.

Ein alternatives Dampferzeugungsprinzip sieht eine freistehende Heizkörperoberfläche vor, die mit Wasser benetzt wird und die zur Verdampfung des aufgebrachten Wassers dient. Bei diesem Prinzip wird die zugeführte Wassermenge zeitlich dosiert und durch einen Führungskanal auf eine Zentrifugalnabe gebracht, die das Wasser auf die Heizung zerstreut, wo es verdampft wird. Ein solches Prinzip ist in EP 0 233 535 A beschrieben.

Beide beschriebenen Prinzipien führen nach längerer Betriebsdauer zu Verkalkungsproblemen, was einen relativ großen Wartungsaufwand nach sich zieht. Die Kalkbildung entsteht hauptsächlich an Stellen, an denen ein Phasenübergang zwischen flüssigem Zustand und gasförmigen Zustand des Wassers stattfindet, und zwar bei Temperaturen oberhalb von 60 °C. Bei dem oben beschriebenen Tauchsiederprinzip finden sich Kalkrückstände im Verdampfungsbehälter oder am eingetauchten Heizkörper. Der Dampf selbst weist keinen Kalk mehr auf. Auskondensierter Wasser ist destilliert und daher hinsichtlich weiterer Kalkablagerungen unproblematisch.

Im zweiten beschriebenen Fall findet die Verkalkung vorwiegend im Wasserzuführkanal statt. Die Kalkbildung am Heizkörper führt kaum zu Problemen, da die entstehenden relativ großen Oberflächentemperaturunterschiede zu einem Abplatzen des Kalks vom Heizkörper führt. Probleme hinsichtlich Kalkablagerungen können insbesondere im Wasserzuführsystem auftreten, das üblicherweise mittels temperaturbeständiger Transportkanäle realisiert ist. Diese Wassertransportkanäle befinden sich in Kontakt oder innerhalb des heißen Garraums bzw. in der Nähe des heißen Heizkörpers. Die Kombination der starren geschlossenen Wasserzuführkanäle und der hohen Temperaturen, denen diese ausgesetzt sind, führen zu den erwähnten Verkalkungs- bzw. Verstopfungsproblemen.

Dokument EP-0893084 beschreibt einen Dampfgarofen mit einer Dampferzeugereinheit.

Eine Aufgabe der vorliegenden Erfindung besteht darin, ein Dampfgargerät zur Verfügung zu stellen, bei dem eine Verkalkungsanfälligkeit weitgehend reduziert ist.

Diese Aufgabe wird mit dem Gegenstand des unabhängigen Anspruchs gelöst. Merkmale vorteilhafter Weiterbildungen ergeben sich aus den abhängigen Ansprüchen.

Bei einem erfindungsgemäßen Dampfgargerät mit den Merkmalen des Anspruchs 1 ist die Frischwasserzuführleitung mit ihrer Auslassöffnung oberhalb einer in der Oberseite der Muffel vorgesehenen Öffnung angeordnet, so dass der Wasserzuführkanal während des Betriebs des Dampfgargeräts deutlich geringeren Temperaturen ausgesetzt als dies bei herkömmlichen Anordnungen der Fall ist, bei denen eine Mündungsöffnung eines Wasserzuführkanals in unmittelbarer Nähe zu einem Heizkörper angeordnet ist. Durch die entfernte Anbringung des Wasserzuführkanals kann die Temperatur innerhalb des Kanals gegenüber bekannten Systemen soweit reduziert werden, dass die Ausfällung von Kalkablagerungen minimiert werden kann. Die im Wasserzuführkanal entstehenden Temperaturen können weitgehend durch die Distanz zwischen Muffel bzw. Garraum und Mündungsöffnung des Wasserzuführkanals reguliert werden. Eine Vergrößerung der Distanz zwischen Wasserzuführkanal und Heizeinrichtung kann die im Kanal entstehenden Temperaturbelastungen weiter senken.

Der Wasserzuführkanal endet vorzugsweise oberhalb der Muffel bzw. an deren Oberseite, so dass in einem Mündungsbereich der Auslassöffnung der Frischwasserzuführleitung während des Garbetriebs des Dampfgargeräts eine Temperatur von nicht mehr als ungefähr 60 °C herrscht. Da bei diesen Temperaturen die Ausfällung von Kalk relativ gering ist, bilden sich nur geringe Kalkablagerungen in der Frischwasserzuführleitung, so dass diese über einen längeren Zeitraum ohne Wartung im Gerät verbleiben kann. Der Frischwasserzuführkanal kann insbesondere in einer Öffnung münden, die sich an der Oberseite der Muffel befindet, so dass herab tropfendes Wasser durch diese Öffnung in die Muffel hinein tropfen und auf eine Leiteinrichtung fallen kann, die für eine Zuführung des Frischwassers zu einer Verdampfereinheit sorgen kann. Die Verdampfereinheit kann insbesondere aus einer Ventilationseinrichtung und einem Heizkörper bestehen, der durch die Luftströmung der Ventilationseinrichtung und dem dabei mitgeführten Wasser benetzt wird und das Wasser zum Verdampfen bringt.

Vorzugsweise ist zumindest die Ausströmöffnung der Frischwasserzuführleitung in einem Gehäuseabschnitt angeordnet, der bis auf die Öffnung zur Muffel gegenüber der Gehäuseumgebung des Dampfgargeräts weitgehend abgedichtet ist. Dieser Gehäuseabschnitt kann bspw. eine zylindrische oder eine andere geeignete Form aufweisen. Eine stirnseitige Öffnung des Gehäuseabschnittes schließt dabei vorzugsweise mit der Öffnung in der Oberseite der Muffel ab, so dass die seitlich im Gehäuseabschnitt angeordnete und dichtend montierte Frischwasserzuführleitung weit genug entfernt von der Heizeinrichtung angeordnet ist. Zusätzlich kann vorgesehen sein, dass innerhalb des Gehäuseabschnittes ein Injektor angeordnet ist, der die Ausströmöffnung der Frischwasserzuführleitung bildet. Der Injektor kann fest im Gehäuseabschnitt montiert sein, so dass ein Stutzen nach außen ragt, an dem ein freies Ende der Frischwasserzuführleitung montiert werden kann. Auf diese Weise kann der Gehäuseabschnitt mit dem darin fixierten Injektor ein von der Muffel trennbares Bauteil bilden, das zur Reinigung, Wartung und/oder Reparatur demontiert und anschließend wieder montiert werden kann.

Die unterhalb der Öffnung in der Oberseite der Muffel angeordnete Leiteinrichtung besteht vorzugsweise aus einem Führungsleitblech mit einer geneigten Ebene, die beispielsweise in einen Bereich zwischen einer Zentrifugalnabe und einem Ringheizkörper hinein ragen kann, so dass das herab tropfende Wasser auf die Zentrifugalnabe gelangen kann. Das Führungsleitblech ist vorzugsweise an einer Seitenwand des Garraums montiert.

Eine weitere Leiteinrichtung kann wahlweise zwischen Injektor und Führungsleitblech angeordnet sein. Diese kann dafür sorgen, dass das Frischwasser zuverlässig auf das Führungsleitblech gelangt, von wo aus es zur Ventilationseinrichtung gelenkt wird. Diese weitere Leiteinrichtung kann insbesondere ein innerhalb der Muffel angeordneter, vertikal oder leicht zur Vertikalen geneigter Führungsstab sein. Falls dieser nach längerem Gebrauch Kalkablagerungen aufweist, kann er problemlos entnommen, gereinigt und anschließend wieder montiert werden.

Die Frischwasserzuführleitung weist vorzugsweise einen geschwungenen bzw. S-förmigen Verlauf auf, so dass ein stehender Wasserspiegel innerhalb einer Senke der Leitung ein Dampfsperre bildet und verhindern kann, dass aufsteigender Dampf in das Innere der Zuführleitung gelangen kann.

Die Erfindung wird nachfolgend anhand eines bevorzugten Ausführungsbeispiels unter Bezugnahme auf beiliegenden Zeichnungen näher erläutert. Dabei zeigt:
- Figur 1: eine Prinzipdarstellung eines erfindungsgemäßen Dampfgargeräts,
- Figur 2: einen Detailausschnitt einer Frischwasserzuführung zu einer Dampferzeugungseinheit des erfindungsgemäßen Dampfgargeräts und
- Figur 3: eine perspektivische Darstellung eines Führungsleitblechs zur Verteilung des Frischwasserstroms.

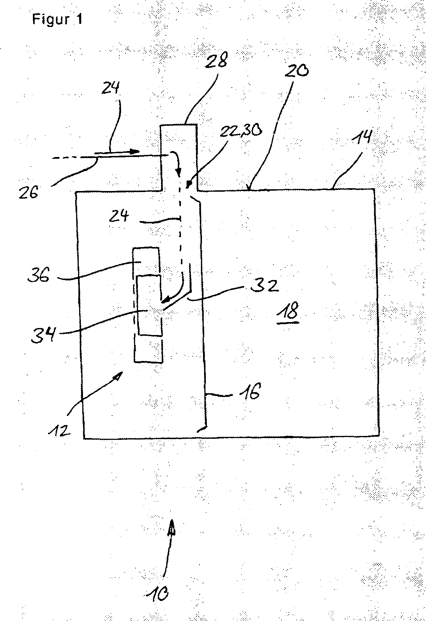

Die schematische Darstellung der Figur 1 zeigt ein erfindungsgemäßes Dampfgargerät 10, bei dem eine Dampferzeugungseinheit 12 innerhalb einer Muffel 14 angeordnet ist. Die Dampferzeugungseinheit 12 ist mittels eines Seitenblechs 16 von einem Garraum 18 getrennt. Im Seitenblech 16 sind nicht dargestellte Öffnungen vorgesehen, durch die der von der Dampferzeugungseinheit 12 erzeugte Dampf in den Garraum 18 geleitet werden kann.

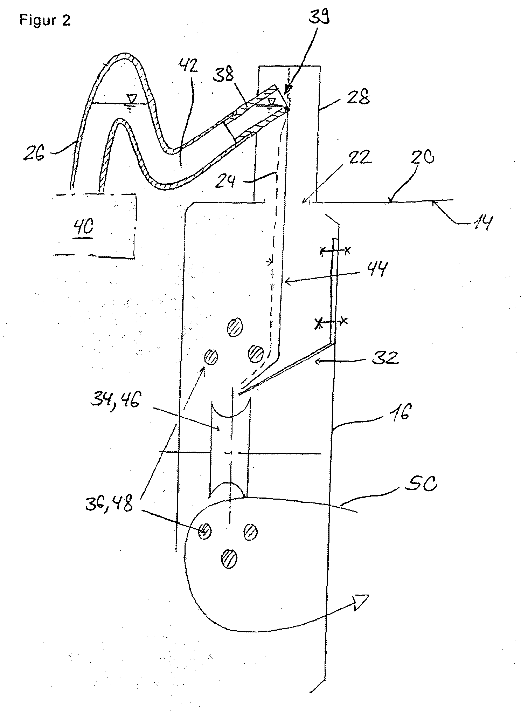

An einer Oberseite 20 der Muffel 14 ist eine Öffnung 22 vorgesehen, durch die Frischwasser 24 zur Dampferzeugungseinheit 12 geleitet werden kann. Hierzu dient eine Frischwasserzuführleitung 26, deren freies Ende in einen Gehäuseabschnitt 28 mündet, dessen nach unten offene Stirnseite 30 mit der Öffnung 22 abschließt. Der Gehäuseabschnitt 28 ist zur Umgebung hin abgeschlossen, so dass kein Dampf in den Gehäuseinnenraum des Dampfgargeräts 10 außerhalb der Muffel 14 entweichen kann. Der Gehäuseabschnitt 28 kann bspw. zylindrisch oder quaderförmig ausgebildet sein. Die Frischwasserzuführleitung 26 ist dichtend und ggf. trennbar (vgl. Figur 2) am Gehäuseabschnitt 28 befestigt. Vorzugsweise ist auch der Gehäuseabschnitt 28 von der Muffel 14 trennbar, so dass er zu Wartungszwecken demontiert und anschließend wieder aufgesetzt werden kann.

Das aus der Frischwasserzuführleitung 26 im Gehäuseabschnitt 28 nach unten tropfende Frischwasser 24 fällt in Richtung der Schwerkraft durch die Öffnung 22 nach unten und trifft innerhalb der Muffel 14 auf ein Führungsleitblech 32, das am Seitenblech 16 befestigt ist. Das Führungsleitblech 32 mündet mit einem Ende in einem Bereich zwischen einer Ventilationseinrichtung 34 und einem radial beabstandet zu dieser angeordneten Heizeinrichtung 36, die zur Verdampfung des von der Ventilationseinrichtung 34 in Richtung zur Heizeinrichtung 36 geförderten Frischwassers 24 sorgt. Die Ventilationseinrichtung 34 sorgt gleichzeitig für die Bildung einer Luftströmung, welche den gebildeten Dampf in Richtung zum Garraum 18 befördert.

Die Detaildarstellung der Figur 2 verdeutlicht eine beispielhafte Ausgestaltung des erfindungsgemäßen Dampfgargeräts 10 mit der außerhalb der Muffel 14 angeordneten Frischwasserzuführleitung 26, die in den Gehäuseabschnitt 28 an der Öffnung 22 in der Oberseite 20 der Muffel 14 mündet. Im gezeigten Ausführungsbeispiel ist das freie Ende der Frischwasserzuführleitung 26 mit einem Injektor 38 verbunden, vom dem die Frischwasserzuführleitung 26 zu Reinigungszwecken abgenommen und wieder aufgesteckt werden kann. Der Injektor 38 weist die Gestalt eines schräg in einer Mantelseite des Gehäuseabschnittes 28 angeordneten Rohrstutzens auf, dessen Mittelachse in Richtung zur Innenseite des Gehäuseabschnittes 28 schräg nach oben geneigt ist, bspw. in einem Winkel von 30 bis 60 Grad. Die Auslassöffnung 39 des Injektors 38 ist vollständig innerhalb des Gehäuseabschnittes 28 angeordnet.

Die Frischwasserzuführleitung 26 weist in einem Bereich zwischen einem Frischwasserreservoir 40 und dem Injektor 38 einen S-förmigen Verlauf auf, wodurch eine Dampfsperre 42 gebildet wird, da in einem bogenförmigen Abschnitt, dessen Niveau unterhalb der Auslaufkante des Injektors 38 liegt, ein Wasserspiegel stehen bleibt. Die Dampfsperre 42 verhindert ein Austreten von Dampf aus der Muffel 14 und sorgt gleichzeitig für eine Kühlung der Leitung 26, so dass die Ausfällung von Kalk innerhalb der Frischwasserzuführleitung 26 weitgehend verhindert wird.

Das aus der Mündungsöffnung 39 des Injektors 38 tropfende Frischwasser 24 fällt in Richtung der Schwerkraft nach unten und trifft innerhalb der Muffel 14 auf das Führungsleitblech 32, das am Seitenblech 16 befestigt ist. Ein alternativ zum Führungsleitblech 32 oder zusätzlich zum Führungsleitblech 32, vertikal angeordneter Führungsstab 44 dient zur Lenkung der Fließbahn des Frischwassers 24, das durch die Oberflächenspannung entlang des Stabes 44 nach unten zum Führungsleitblech 32 geführt wird. Das Führungsleitblech 32 sowie ein unteres Ende des Stabes 44 sind jeweils abgewinkelt und münden mit in einem Bereich zwischen einem rotierenden Lüfterflügel 46 der Ventilationseinrichtung 34 und einem radial beabstandet zu diesem angeordneten Rohrheizkörper 48 der Heizeinrichtung 36, der für die Verdampfung des vom Lüfterflügel 46 radial nach außen in Richtung zum Rohrheizkörper 48 geschleuderten Frischwassers sorgt. Der Lüfterflügel 46 sorgt gleichzeitig für die Bildung einer Luftströmung 50, welche den gebildeten Dampf durch die Öffnungen (nicht dargestellt) im Seitenblech 16 in Richtung zum Garraum 18 fördert.

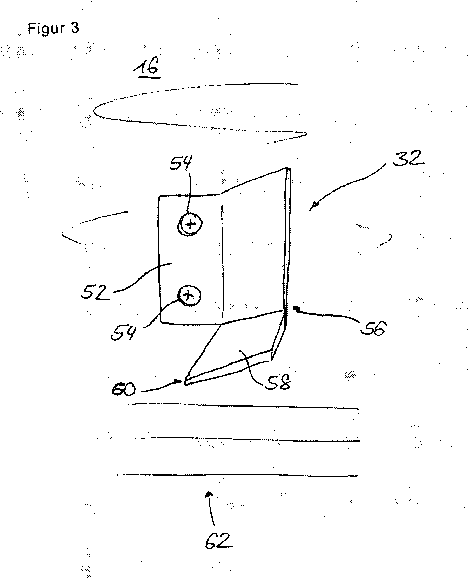

Die schematische Perspektivdarstellung der Figur 3 verdeutlicht eine mögliche Ausgestaltung des Führungsleitblechs 32, das einen rechteckförmigen Anlagebereich 52 zur Verankerung an der Seitenwand 16 mittels geeigneter Befestigungsschrauben sowie einen hierzu leicht abgewinkelten Leitbereich 56 zur Verteilung des Frischwassers in die gewünschte Richtung aufweist. Der Leitbereich 56 weist eine schräg nach unten weisende Leitfläche 58 auf, von deren Spitze 60 das Wasser in die Dampferzeugungseinheit geleitet wird. Die Spitze 60 mündet vorzugsweise in den Bereich zwischen dem radialem Umfang des Lüfterflügels und dem darum angeordneten Rohrheizkörper.

Das Führungsleitblech 32 kann auf einfache Weise aus einem gestanzten und anschließend in die gewünschte Form gebrachten Blechstreifen hergestellt werden. Selbstverständlich kann das Führungsleitblech 32 auch auf andere Weise am Seitenblech 16 befestigt werden als mit der gezeigten Schraubverbindung, bspw. mittels einer Niet-, Schweiß- oder Klebeverbindung. Ggf. können am Führungsleitblech 32 Biegelaschen vorgesehen sein, die in entsprechend geformte Öffnungen im Seitenblech 16 eingesetzt und zur Lagefixierung des Führungsleitblechs 32 umgebogen werden können.

Unterhalb des Führungsleitblechs 32 können die Öffnungen 62 des Seitenblechs 16 angeordnet sein, durch welche der Dampf in den Garraum gefördert wird. Die Öffnungen 62 sind im gezeigten Ausführungsbeispiel als horizontale Längsschlitze ausgestaltet.

Aus den Figuren wird unmittelbar deutlich, dass der Bereich der Frischwasserzuführleitung 26, der bei den bekannten Dampfgargeräten besonders verkalkungsanfällig ist, aufgrund der von der Muffel 14 distanzierten Anordnung einer deutlich geringeren Verkalkungsgefahr unterliegt, da die wasserführenden Bereiche insgesamt einer geringeren Temperaturbelastung unterliegen. Dadurch fällt deutlich weniger Kalk aus. Der Injektorbereich kann demontiert und problemlos gereinigt bzw. von Kalk befreit und nach längerer Benutzungsdauer ggf. ausgetauscht werden.

### Bezugszeichenliste

- 10: Dampfgargerät
- 12: Dampferzeugungseinheit
- 14: Muffel
- 16: Seitenblech
- 18: Garraum
- 20: Oberseite
- 22: Öffnung
- 24: Frischwasser
- 26: Frischwasserzuführleitung
- 28: Gehäuseabschnitt
- 30: Stirnseite
- 32: Führungsleitblech
- 34: Ventilationseinrichtung
- 36: Heizeinrichtung
- 38: Injektor
- 39: Auslassöffnung
- 40: Frischwasserreservoir
- 42: Dampfsperre
- 44: Führungsstab
- 46: Lüfterflügel
- 48: Rohrheizkörper
- 50: Luftströmung
- 52: Anlagebereich
- 54: Befestigungsschraube
- 56: Leitbereich
- 58: Leitfläche
- 60: Spitze

## Patentansprüche

1. Dampfgargerät (10), aufweisend eine Muffel (14) mit darin angeordneter Dampferzeugungseinheit (12), als auch eine Frischwasserzuführleitung (26) zur Zuführung von Frischwasser (24) zu der Dampferzeugungseinheit (12) in der Muffel (14), **dadurch gekennzeichnet, dass** die Frischwasserzuführleitung (26) mit ihrer Auslassöffnung (39) oberhalb einer in der Oberseite (20) der Muffel (14) vorgesehenen Öffnung (22) angeordnet ist.

2. Dampfgargerät nach Anspruch 1, **dadurch gekennzeichnet, dass** in einem Mündungsbereich der Auslassöffnung (39) der Frischwasserzuführleitung (26) während des Garbetriebs des Dampfgargeräts (10) eine Temperatur von nicht mehr als ungefähr 60 °C herrscht.

3. Dampfgargerät nach Anspruch 1 oder 2, **dadurch gekennzeichnet, dass** zumindest die Auslassöffnung (39) der Frischwasserzuführleitung (26) in einem Gehäuseabschnitt (28) angeordnet ist, der bis auf die Öffnung (22) zur Muffel (14) gegenüber der Umgebung weitgehend abgedichtet ist.

4. Dampfgargerät nach Anspruch 3, **dadurch gekennzeichnet, dass** innerhalb des Gehäuseabschnittes (28) ein Injektor (38) angeordnet ist, der die Auslassöffnung (39) der Frischwasserzuführleitung (26) bildet und von dem die Frischwasserzuführleitung (26) trennbar ist.

5. Dampfgargerät nach einem der vorhergehenden Ansprüche, **dadurch gekennzeichnet, dass** das Frischwasser mittels der Frischwasserzuführteitung (26) auf die Dampferzeugungseinheit (12) geführt ist.

6. Dampfgargerät nach Anspruch 6, **dadurch gekennzeichnet, dass** unterhalb der Öffnung (22) in der Oberseite (20) der Muffel (14) eine Leiteinrichtung zur Lenkung des Frischwassers (24) zur Dampferzeugungseinheit (12) angeordnet ist.

7. Dampfgargerät nach Anspruch 6, **dadurch gekennzeichnet, dass** die Leiteinrichtung zumindest ein Führungsleitblech (32) umfasst.

8. Dampfgargerät nach Anspruch 6, **dadurch gekennzeichnet, dass** das Führungsleitblech (32) in einen Bereich zwischen der Heizeinrichtung (36) und einem innerhalb deren Umfanges angeordneten Ventilationseinrichtung (34) ragt.

9. Dampfgargerät nach einem der Ansprüche 6 bis 8, **dadurch gekennzeichnet, dass** die Leiteinrichtung ein innerhalb der Muffel (14) angeordneter Führungsstab (44) ist.

## Claims

1. Steam cooking appliance (10), comprising a muffle (14) with steam generating unit (12) arranged therein, as well as a fresh water feed duct (26) for the feed of fresh water (24) to the steam generating unit (12) in the muffle (14), **characterised in that** the fresh water feed duct (26) is arranged with its outlet opening (39) above an opening (22) provided in the upper side (20) of the muffle (14).

2. Steam cooking appliance according to claim 1, **characterised in that** a temperature of not more than approximately 60° C prevails in an opening region of the output opening (39) of the fresh water feed duct (26) during cooking operation of the steam cooking appliance (10).

3. Steam cooking appliance according to claim 1 or 2, **characterised in that** at least the outlet opening (39) of the fresh water feed duct (26) is arranged in a housing section (28), which is substantially sealed relative to the environment as far as the opening (22) to the muffle (14).

4. Steam cooking appliance according to claim 3, **characterised in that** arranged within the housing section (28) is an injector (38) which forms the outlet opening (39) of the fresh water feed duct (26) and from which the fresh water feed duct (26) is separable.

5. Steam cooking appliance according to any one of the preceding claims, **characterised in that** the fresh water is guided to the steam generating unit (12) by means of the fresh water feed duct (26).

6. Steam cooking appliance according to claim 6, **characterised in that** a guide device for deflecting the fresh water (24) to the steam generating unit (12) is arranged below the opening (22) in the upper side (20) of the muffle (14).

7. Steam cooking appliance according to claim 6, **characterised in that** the guide device comprises at least one guidance plate (32).

8. Steam cooking appliance according to claim 6, **characterised in that** the guidance plate (32) projects into a region between the heating device (36) and a ventilation device (34) arranged within the circumference thereof.

9. Steam cooking appliance according to any one of claims 6 to 8, **characterised in that** the guide device is a guide rod (44) arranged within the muffle (14).

## Revendications

1. Appareil de cuisson à vapeur (10), comprenant un moufle (14) avec, disposée à l'intérieur de celui-ci, une unité de production de vapeur (12), ainsi qu'une conduite d'arrivée d'eau fraîche (26) pour l'arrivée d'eau fraîche (24) à l'unité de production de vapeur (12) dans le moufle (14), **caractérisé en ce que** la conduite d'arrivée d'eau fraîche (26) est disposée avec son ouverture de sortie (39) au-dessus d'une ouverture (22) prévue sur le côté supérieur (20) du moufle (14).

2. Appareil de cuisson à vapeur selon la revendication 1, **caractérisé en ce qu'**une température inférieure à environ 60°C règne dans une zone de débouché de l'ouverture de sortie (39) de la conduite d'arrivée d'eau fraîche (26) pendant l'opération de cuisson de l'appareil de cuisson à vapeur (10).

3. Appareil de cuisson à vapeur selon la revendication 1 ou 2, **caractérisé en ce qu'**au moins l'ouverture de sortie (39) de la conduite d'arrivée d'eau fraîche (26) est disposée dans une partie de boîtier (28) qui est largement étanchéifiée par rapport à l'environnement à l'exception de l'ouverture (22) du moufle (14).

4. Appareil de cuisson à vapeur selon la revendication 3, **caractérisé en ce que** à l'intérieur de la partie de boîtier (28) est disposé un injecteur (38), qui forme l'ouverture de sortie (39) de la conduite d'arrivée d'eau fraîche (26) et duquel la conduite d'arrivée d'eau fraîche (26) peut être séparée.

5. Appareil de cuisson à vapeur selon l'une quelconque des revendications précédentes, **caractérisé en ce que** l'eau fraîche est guidée au moyen de la conduite d'arrivée d'eau fraîche (26) sur l'unité de production de vapeur (12).

6. Appareil de cuisson à vapeur selon la revendication 6, **caractérisé en ce que** au-dessous de l'ouverture (22) sur le côté supérieur (20) du moufle (14) est disposé un dispositif directeur pour le guidage de l'eau fraîche (24) vers l'unité de production de vapeur (12).

7. Appareil de cuisson à vapeur selon la revendication 6, **caractérisé en ce que** le dispositif directeur comporte au moins une tôle chicane de guidage (32).

8. Appareil de cuisson à vapeur selon la revendication 6, **caractérisé en ce que** la tôle chicane de guidage (32) dépasse dans une zone entre le dispositif de chauffage (36) et un dispositif de ventilation (34) disposé à l'intérieur du pourtour du dispositif de chauffage.

9. Appareil de cuisson à vapeur selon l'une quelconque des revendications 6 à 8, **caractérisé en ce que** le dispositif directeur est une baguette de guidage (44) disposée à l'intérieur du moufle (14).
